(19) Europäisches Patentamt
European Patent Office
Office européen des brevets

(11) **EP 3 882 020 A1**

(12) **EUROPEAN PATENT APPLICATION**
published in accordance with Art. 153(4) EPC

(43) Date of publication:
**22.09.2021 Bulletin 2021/38**

(21) Application number: **19884888.9**

(22) Date of filing: **11.10.2019**

(51) Int Cl.:
**B32B 15/08** (2006.01)    **B29C 43/20** (2006.01)
**B29C 43/34** (2006.01)    **B29C 70/12** (2006.01)
**B29C 70/42** (2006.01)    **B29C 70/68** (2006.01)
**B32B 27/04** (2006.01)    **B32B 27/20** (2006.01)
**H01M 8/0206** (2016.01)    **H01M 8/0221** (2016.01)
**H01M 8/0223** (2016.01)    **H01M 8/0228** (2016.01)
**H01M 8/0258** (2016.01)    **B29K 101/10** (2006.01)
**B29K 105/12** (2006.01)    **B29L 9/00** (2006.01)

(86) International application number:
**PCT/JP2019/040234**

(87) International publication number:
**WO 2020/100489 (22.05.2020 Gazette 2020/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2018   JP 2018215469**

(71) Applicant: **Nisshinbo Holdings Inc.**
**Tokyo 103-8650 (JP)**

(72) Inventors:
• **YASUDA, Kosuke**
**Chiba-city, Chiba 267-0056 (JP)**
• **OKEI, Takehiro**
**Chiba-city, Chiba 267-0056 (JP)**
• **ASHIZAKI, Shoya**
**Chiba-city, Chiba 267-0056 (JP)**
• **OOYAGI, Reon**
**Chiba-city, Chiba 267-0056 (JP)**

(74) Representative: **Mewburn Ellis LLP**
**Aurora Building**
**Counterslip**
**Bristol BS1 6BX (GB)**

(54) **CONDUCTIVE METAL RESIN MULTILAYER BODY AND MOLDED BODY OF SAME**

(57)    The present invention provides a conductive metal resin multilayer body that comprises: a metal foil; and a resin layer which is arranged on at least one surface of the metal foil, and which contains a resin, organic fibers and a conductive filler that is formed of a non-metal material.

**EP 3 882 020 A1**

**Description**

TECHNICAL FIELD

The present invention relates to a conductive metal resin multilayer body and a molded body of the same.

BACKGROUND ART

A fuel cell separator plays a role of imparting conductivity to individual unit cells, a role of securing a passage for a fuel and air (oxygen) to be supplied to the unit cells, and a role as a separation boundary wall between the unit cells. Therefore, the separator is required to have various characteristics such as high conductivity, high gas impermeability, chemical stability, heat resistance, and hydrophilicity.

The fuel cell separator is roughly classified into a carbon separator composed of a carbon-based material and a metal separator composed of a metal material. Among these, the metal separator has high conductivity, high thermal conductivity, mechanical strength, and gas impermeableness. However, the metal separator is disadvantageously apt to be corroded under an environment in a fuel cell.

In the metal separator, a method including covering a metal material with an appropriate covering layer has been proposed as a measure against corrosion. For example,

Patent Document 1 discloses a separator for fuel cells in which a resin conductive layer obtained by mixing a resin with a conductive filler is provided on at least one surface of a metal substrate, and a gas flow path is formed by press processing. However, such a conventional technique has a problem that a non-metal conductive layer is extruded during processing to expose a metal at a place where a high processing load causes a concentrated load.

PRIOR ART DOCUMENTS

PATENT DOCUMENTS

Patent Document 1: WO 2005/027248

SUMMARY OF INVENTION

TECHNICAL PROBLEM

The present invention has been made to solve the above problems, and it is an object of the present invention to provide a conductive metal resin multilayer body including a metal foil and a resin layer and having excellent moldability and processability, and a molded body of the same.

SOLUTION TO PROBLEM

As a result of diligent studies to solve the above problems, the present inventors have found that a conductive metal resin multilayer body including a metal foil, and a resin layer containing a conductive filler composed of a non-metal material, an organic fiber, and a resin on at least one surface thereof has improved moldability and processability, and have completed the present invention.

That is, the present invention provides the following conductive metal resin multilayer body and molded body of the same.

1. A conductive metal resin multilayer body including: a metal foil; and a resin layer containing a conductive filler composed of a non-metal material, an organic fiber, and a resin on at least one surface thereof.
2. The conductive metal resin multilayer body according to 1, wherein the resin layer is obtained by impregnating a non-metal conductive sheet containing the conductive filler composed of the non-metal material and the organic fiber with the resin.
3. The conductive metal resin multilayer body according to 1 or 2, wherein the organic fiber has a melting point higher than a heating temperature when the conductive metal resin multilayer body is heated and processed, and is present in a fibrous form even after processed.
4. The conductive metal resin multilayer body according to any one of 1 to 3, wherein the resin is a thermosetting resin.
5. The conductive metal resin multilayer body according to any one of 1 to 4, wherein the conductive filler is composed of a carbon material.
6. A molded body obtained by molding the conductive metal resin multilayer body according to any one of 1 to 5.

7. The molded body according to 6, wherein the molded body is a fuel cell separator, a collector for batteries, an electrode, or a heat radiation plate.

8. A fuel cell separator including: a metal foil; and a resin layer containing a conductive filler composed of a non-metal material, an organic fiber, and a resin on at least one surface thereof, wherein the fuel cell separator includes a groove in one surface or both surfaces.

9. A sheet for producing a conductive metal resin multilayer body including a metal foil and a resin layer containing a conductive filler composed of a non-metal material, an organic fiber, and a resin on at least one surface thereof, wherein the sheet is obtained by impregnating a non-metal conductive sheet containing the conductive filler composed of the non-metal material and the organic fiber with a resin composition containing the resin.

10. The sheet for producing a conductive metal resin multilayer body according to 9, wherein the non-metal conductive sheet is composed of a paper sheet containing the conductive filler composed of the non-metal material and the organic fiber.

11. The sheet for producing a conductive metal resin multilayer body according to 9 or 10, wherein the resin is a thermosetting resin.

12. The sheet for producing a conductive metal resin multilayer body according to any one of 9 to 11, wherein the conductive filler is composed of a carbon material.

13. A method for producing a conductive metal resin multilayer body, the method comprising the step of placing the sheet for producing a conductive metal resin multilayer body according to any one of 9 to 12 on at least one surface of a metal foil, followed by pressurizing.

ADVANTAGEOUS EFFECTS OF INVENTION

The multilayer body of the present invention includes the non-metal conductive sheet containing the fiber in the resin layer to have improved moldability. In particular, since even the high processing load portion where the concentrated load is applied is restrained by the fiber, the material does not escape, whereby the metal foil is not exposed.
The non-metal conductive sheet can contain the conductive filler in a high filling rate, can be formed into a thin sheet, and has excellent handleability. The characteristics provide a reduced process load during processing. The non-metal conductive sheet can be highly filled with the filler, whereby the conductivity is also easily controlled.

BRIEF DESCRIPTION OF DRAWINGS

[FIG. 1] FIG. 1 is a digital microscope image of a multilayer body A produced in Example 2.
[FIG. 2] FIG. 2 is a digital microscope image of a multilayer body B produced in Comparative Example 2.

DESCRIPTION OF EMBODIMENTS

[Conductive Metal Resin Multilayer Body]

A conductive metal resin multilayer body of the present invention includes: a metal foil, and a resin layer containing a conductive filler composed of a non-metal material, an organic fiber, and a resin on at least one surface thereof.

[Metal Foil]

The material of the metal foil is not particularly limited, but it preferably has excellent corrosion resistance, and examples thereof include stainless steel, titanium, a titanium alloy, aluminum, an aluminum alloy, copper, a copper alloy, nickel, a nickel alloy, copper, and a copper alloy.
A surface treatment may be applied to the metal foil with the primary purpose of improving some of properties such as hardness, abrasion resistance, lubricity, corrosion resistance, oxidation resistance, heat resistance, heat insulating properties, insulation properties, adhesion, decorating properties, and aesthetic appearance, including corrosion resistance plating and diamond-like carbon coating.
The thickness of the metal foil is preferably 10 to 300 $\mu$m, and more preferably 10 to 200 $\mu$m, from the viewpoint of strength and processability during the handling of the metal foil.

[Resin Layer]

The resin layer contains a conductive filler composed of a non-metal material, an organic fiber, and a resin. The conductive filler is not particularly limited as long as it is the non-metal material, and examples thereof include a carbon material, an inorganic powder, and a conductive ceramic, but the carbon material is preferable. Examples of the carbon material include graphites such as natural graphite, synthetic graphite obtained by baking needle coke, synthetic graphite obtained by baking lump coke, and expandable graphite obtained by a chemical treatment of natural graphite; a crushed carbon electrode; coal-based pitch; petroleum-based pitch; coke; activated carbon; glassy carbon; acetylene black; and Ketjen black. Among these, the graphites are preferable as the conductive filler, from the viewpoint of conductivity. The conductive fillers may be used alone or in combination of two or more.

The shape of the conductive filler is not particularly limited, and may be a sphere, scale, lump, foil, plate, needle, or irregular shape, but from the viewpoint of conductivity when used as a fuel cell separator, a sphere or lump low aspect ratio shape is preferable.

The average particle size of the conductive filler is preferably 1 to 200 $\mu$m, and more preferably 1 to 100 $\mu$m. If the average particle size of the conductive filler is within the above range, required conductivity can be obtained while gas barrier properties are ensured. In the present invention, the average particle size is a median diameter ($d_{50}$) in particle size distribution measurement based on a laser diffraction method.

The content of the conductive filler is preferably 30 to 96 wt%, and more preferably 30 to 85 wt% in the resin layer. If the content of the conductive filler is within the above range, required conductivity can be obtained within a range that does not impair the moldability.

It is preferable that the melting point of the organic fiber is higher than a heating temperature employed when the multilayer body of the present invention is heated and processed. Specifically, the melting point of the organic fiber is preferably 10°C or more higher than the heating temperature, more preferably 20°C or more, and still more preferably 30°C or more, from the viewpoint of reliably holding the organic fiber in a fiber form in order to withstand a processing load during molding. By using such an organic fiber, the strengths of the multilayer body and molded body obtained from the multilayer body can be improved.

Examples of the material of the organic fiber include aramids such as poly p-phenylene terephthalamide (decomposition temperature: 500°C) and poly m-phenylene isophthalamide (decomposition temperature: 500°C), polyacrylonitrile (melting point: 317°C), cellulose (melting point: 260°C), acetate (melting point: 260°C), nylon polyester (melting point: 260°C), polyphenylene sulfide (PPS) (melting point: 280°C), polyethylene (PE) (melting point: 120 to 140°C (HDPE), 95 to 130°C (LDPE)), and polypropylene (PP) (melting point: 160°C).

The average fiber length of the organic fibers is preferably 0.1 to 10 mm, preferably 0.1 to 6 mm, and preferably 0.5 to 6 mm, from the viewpoint of stabilizing grammage during papermaking and of ensuring the strength of the multilayer body. The average fiber diameter of the organic fibers is preferably 0.1 to 100 $\mu$m, more preferably 0.1 to 50 $\mu$m, and still more preferably 1 to 50 $\mu$m, from the viewpoint of moldability. In the present invention, the average fiber length and the average fiber diameter are arithmetic average values of the fiber lengths and fiber diameters of any 100 fibers measured using an optical microscope or an electron microscope.

The content of the organic fiber is preferably 1 to 20 wt%, and more preferably 3 to 15 wt% in the resin layer. If the content of the organic fiber is within the above range, the moldability is not impaired. The organic fibers may be used alone or in combination of two or more.

The resin is not particularly limited, but a resin having a melting point or a glass transition point of 100°C or higher is preferable, from the viewpoint of heat resistance. Such a resin may be a thermosetting resin or a thermoplastic resin, but the thermosetting resin is preferable, from the viewpoint of heat resistance and creep resistance.

Examples of the thermosetting resin include a phenol resin such as a resol-type phenol resin or a novolak-type phenol resin, a furan resin such as a furfuryl alcohol resin, a furfuryl alcohol furfural resin, or a furfuryl alcohol phenol resin, a polyimide resin, a polycarbodiimide resin, a polyacrylonitrile resin, a pyrene-phenanthrene resin, a polyvinyl chloride resin, an epoxy resin, a urea resin, a diallyl phthalate resin, an unsaturated polyester resin, a melamine resin, and a xylene resin. The thermosetting resin is preferably an epoxy resin or a phenol resin, from the viewpoint of processability and physical properties of the molded body.

Examples of the thermoplastic resin include polyethylene, polypropylene, polyphenylene sulfide, fluororesin, polybutylene terephthalate, liquid crystal polymer, polyetheretherketone, polycycloolefin, polyethersulfone, derivatives thereof having a melting point of 100°C or higher, polycarbonate, polystyrene, polyphenylene oxide, and derivatives thereof having a glass transition point of 100°C or higher. The thermoplastic resin is preferably polypropylene, from the viewpoint of cost, heat resistance, and creep resistance.

When the epoxy resin is used as the resin, a curing agent and a curing accelerator may be impregnated in addition to a base compound. Thus, curing is started in a state where the components is compatible with each other, whereby a curing rate and uniformity of the physical properties of the molded body are improved.

The epoxy resin is not particularly limited as long as it has an epoxy group. Examples thereof include o-cresol novolak-type epoxy resins, phenol novolak-type epoxy resins, bisphenol A-type epoxy resins, bisphenol F-type epoxy resins, biphenyl-type epoxy resins, biphenyl-aralkyl type epoxy resins, trisphenol-type epoxy resins, brominated epoxy resins, dicyclopentadiene-type epoxy resins, and biphenyl novolak-type epoxy resins. These may be used alone or in combination of two or more.

The curing agent is preferably a phenol resin, and specific examples thereof include a novolak-type phenol resin, a cresol-type phenol resin, an alkyl-modified phenol resin, a biphenyl aralkyl-type epoxy resin, and a trisphenol-type epoxy resin. These may be used alone or in combination of two or more.

The curing accelerator is not particularly limited as long as it accelerates the reaction of epoxy groups with the curing agent. Specific examples of the curing accelerator include triphenylphosphine, tetraphenylphosphine,diazabicycloundecene, dimethylbenzylamine, 2-methylimidazole, 2-methyl-4-imidazole, 2-phenylimidazole, 2-phenyl-4-methylimidazole, 2-undecylimidazole, and 2-heptadecylimidazole. These may be used alone or in combination of two or more.

The upper limit of the melting point or glass transition point of the resin is not particularly limited, but it is preferably 300°C or lower, from the viewpoint of the productivities of the multilayer body and molded body obtained from the multilayer body.

A part of the resin may be in a fiber form as long as the melting point of the resin is lower than a processing temperature, and the melting point is preferably 10°C or more lower than the processing temperature, more preferably 20°C or more, and still more preferably 30°C or more.

The content of the resin is preferably 1 to 50 wt%, and more preferably 1 to 30 wt% in the resin layer. If the content is within the above range, the conductivity after molding is not impaired.

The resin layer may further contain a conductive auxiliary agent in order to improve conductivity. As the conductive auxiliary agent, carbon materials such as carbon fibers, carbon nanofibers, and carbon nanotubes, which are in the form of fibers, are preferable, from the viewpoint of corrosion resistance.

Examples of the carbon fiber include a PAN-based carbon fiber derived from a polyacrylonitrile (PAN) fiber, a pitch-based carbon fiber derived from pitches such as petroleum pitch, and a phenol-based carbon fiber derived from a phenol resin. The PAN-based carbon fiber is preferable, from the viewpoint of cost.

The average fiber length of the fibrous conductive auxiliary agent is preferably 0.1 to 10 mm, preferably 0.1 to 7 mm, and preferably 0.1 to 5 mm, from the viewpoint of achieving both moldability and conductivity. The average fiber diameter is preferably 3 to 50 μm, preferably 3 to 30 μm, and preferably 3 to 15 μm from the viewpoint of moldability.

When the conductive auxiliary agent is contained, the content thereof in the resin layer is preferably 1 to 20 wt%, and more preferably 1 to 10 wt%. If the content of the conductive auxiliary agent is within the above range, required conductivity can be ensured without impairing the moldability. The conductive auxiliary agents may be used alone or in combination of two or more.

The resin layer may contain other components in addition to the above-described components. Examples of the other components include internal mold releasing agents such as stearate-based wax, amide-based wax, montanate-based wax, carnauba wax, and polyethylene wax; an anionic, cationic, or nonionic surfactant; strong acid; strong electrolyte; base; known flocculants suited to polyacrylamide-based, sodium polyacrylate-based and polymethacrylate-based surfactants; and thickeners such as carboxymethyl cellulose, starch, vinyl acetate, polylactic acid, polyglycolic acid, and polyethylene oxide. The contents of these components may be optional as long as the effects of the present invention are not impaired.

[Method for Manufacturing Conductive Metal Resin Multilayer Body]

The conductive metal resin multilayer body of the present invention can be manufactured, for example, by a manufacturing method including the step of placing a multilayer body manufacturing sheet for forming the resin layer on a metal foil, followed by pressurizing. At this time, the multilayer body manufacturing sheet is preferably obtained by impregnating a non-metal conductive sheet containing a conductive filler composed of a non-metal material and an organic fiber with a resin composition containing a resin.

The non-metal conductive sheet is preferably a paper sheet containing a conductive filler and an organic fiber. The conductive filler and the organic fiber are as described above. The content of the conductive filler is preferably 50 to 96 wt%, and more preferably 60 to 96 wt% in the paper sheet. If the content of the conductive filler is within the above range, required conductivity can be obtained within a range that does not impair the moldability.

The content of the organic fiber is preferably 1 to 20 wt%, and more preferably 3 to 15 wt% in the paper sheet. If the content of the organic fiber is within the above range, damage tolerability after molding can be imparted without impairing the moldability. The organic fibers may be used alone or in combination of two or more.

The above-described conductive auxiliary agent and other components may be contained. The content of the conductive auxiliary agent is preferably 1 to 20 wt%, and more preferably 1 to 10 wt% in the paper sheet. If the content of the conductive auxiliary agent is within the above range, required conductivity can be ensured without impairing the moldability. The conductive auxiliary agents may be used alone or in combination of two or more. The content of the other components may be optional as long as the effects of the present invention are not impaired.

The paper sheet can be manufactured by subjecting a composition containing the above-described components to paper. The paper method is not particularly limited, and conventionally known methods may be used. For example, by dispersing the composition containing the above-described components in a solvent that does not dissolve these components, depositing the components in the obtained dispersion on a substrate, and drying the obtained deposited material, the paper sheet of the present invention can be manufactured. By producing the sheet by the paper method, the fibers can be uniformly dispersed in the sheet, and the fibers can be contained until the sheet has sufficient strength.

The paper sheet has sufficient strength even if the grammage is as low as about 50 to 1,500 g/m$^2$. The thickness of the paper sheet is preferably about 0.2 to 1.0 mm.

The resin composition with which the non-metal conductive sheet is impregnated may contain a conductive filler composed of a non-metal material, if necessary. By impregnating the sheet with the resin composition containing the conductive filler, a conductive filler layer is formed on the surface of the sheet (that is, the conductive filler is localized on the surface of the sheet), so that the molded body obtained from the multilayer body of the present invention has a suppressed decrease in resistance and improved surface conductivity. The resin and the conductive filler are as described above.

The content of the resin in the resin composition is preferably 20 to 100 wt%, and more preferably 60 to 100 wt%. When the conductive filler is contained, the content thereof is preferably 0.1 to 80 wt%, and more preferably 0.1 to 40 wt%. If the content of the conductive filler is within the above range, the dispersibility of the conductive filler in the resin is excellent, which makes it possible to prevent the segregation of the conductive filler when impregnated.

The resin composition may contain other components, if necessary. Examples of the other components include internal mold releasing agents such as stearate-based wax, amide-based wax, montanate-based wax, carnauba wax, and polyethylene wax; an anionic, cationic, or nonionic surfactant; strong acid; strong electrolyte; base; known flocculants suited to polyacrylamide-based, sodium polyacrylate-based, and polymethacrylate-based surfactants; thickeners such as carboxymethyl cellulose, starch, vinyl acetate, polylactic acid, polyglycolic acid, and polyethylene oxide; an antioxidant, a heat stabilizer, a halogen scavenger, an ultraviolet absorber, an antibacterial agent, an inorganic filler, a lubricant, a plasticizer, a flame retarder, a surfactant, a hydrophilizer, a water repellant, and a sliding agent. The contents of these components may be optional as long as the effects of the present invention are not impaired.

From the viewpoint of productivity, the resin composition is preferably in a liquid form including a slurry form, or a film form. When the resin composition is in a liquid form, for example, a suspension obtained by dissolving or suspending the above-described components in a solvent can be used. The solvent is not particularly limited, and may be appropriately selected according to purposes. Examples thereof include an aqueous solvent and an organic solvent. Examples of the aqueous solvent include water and alcohol. Examples of the organic solvent include acetone, N-methyl-2-pyrrolidone (NMP), toluene, and methyl ethyl ketone (MEK). The content of the solvent is not particularly limited as long as the solvent dissolves the entire amount of the resin composition.

When the resin composition is in a film form, a film (simply referred to as "resin film", hereinafter) may be used, which is obtained by heating the resin and, if necessary, the above-described components to a temperature higher than the melting point of the resin, followed by kneading and molding. At this time, examples of the molding method include roll pressing, fiat plate pressing, and belt pressing. The thickness of the film is appropriately set depending on the amounts of the resin with which the non-metal conductive sheet is impregnated and the conductive filler.

The multilayer body of the present invention preferably has a thickness of about 150 to 1,000 μm.

By impregnating the non-metal conductive sheet with the resin composition, the multilayer body manufacturing sheet can be manufactured. When the resin composition is in a slurry form or a liquid form, examples of the impregnation method include a method including immersing the non-metal conductive sheet in the composition, and a method including dropping and spraying the composition onto the non-metal conductive sheet to impregnate the non-metal conductive sheet with the resin composition. When the resin composition is in a film form, examples thereof include a method including impregnating the sheet with the resin film in a molten state under heating.

The conductive metal resin multilayer body of the present invention can be used as a precursor of a molded body such as a separator for fuel cells, a collector for batteries, an electrode, a heat radiation plate, an electromagnetic wave shield, an electronic circuit board, a resistor, a heater, a dust-collection filter element, a planar heater element, or an electromagnetic wave material.

[Molded body]

By setting the conductive metal resin multilayer body of the present invention to a desired size by cutting or punching if necessary, and heating and molding the obtained sheet, a molded body can be manufactured. End parts, cut surfaces, and punched portions can be covered with a resin layer after molding by making the multilayer body manufacturing sheet larger than the metal foil. The cut or punched conductive resin multilayer body is put into a mold whose external dimensions are slightly larger than those of the conductive resin multilayer body, and the resin is then fluidized by compression molding, whereby the end parts, the cut surfaces, and the punched portions can be covered.

The molding method is not particularly limited, but the compression molding is preferable. Examples of the mold for performing the compression molding include those capable of forming a groove in one surface or both surfaces of the molded body. By using such a mold, a molded body including a groove in one surface or both surfaces is obtained. The groove serves as a gas flow path in the case of a fuel cell separator, for example.

A temperature (mold temperature) employed during compression molding is preferably 10°C or more, and more preferably 20°C or more higher than the active temperature of the curing accelerator when a thermosetting resin is used as the resin type and the melting point of the resin when a thermoplastic resin is used. A molding pressure is preferably 1 to 100 MPa, and more preferably 1 to 60 MPa.

By the above method, a molded body having a thickness reduced to about 100 to 600 $\mu$m, and excellent conductivity and heat release properties can be manufactured. The molded body can be suitably used as a fuel cell separator, a collector for batteries, an electrode, and a heat radiation plate and the like.

<u>EXAMPLES</u>

Hereinafter, the present invention is described in more detail with reference to Manufacturing Examples, Examples, and Comparative Examples, but the present invention is not limited to the following Examples. Materials used in the following Examples are as follows.

- Natural graphite:                                                     average particle size: 25 $\mu$m
- PAN-based carbon fiber:                                    average fiber length: 3.0 mm, average fiber diameter: 7 $\mu$m
- Poly p-phenylene terephthalamide
  fiber:                                                                      average fiber length: 0.9 mm, average fiber diameter: 10 $\mu$m,
                                                                                   decomposition temperature: 500°C

[1] Production of Conductive Sheet

[Manufacturing Example 1]

87 parts by weight of natural graphite, 3 parts by weight of a PAN-based carbon fiber, and 10 parts by weight of an aramid fiber were put into water, followed by stirring to obtain a fibrous slurry. This slurry was made into a conductive sheet A by papermaking method. The grammage of the conductive sheet A was 78 g/m$^2$.

[2] Preparation of Resin Solution

[Manufacturing Example 2]

71.8 parts by weight of NC-3000 (Nippon Kayaku Co., Ltd.) as an epoxy resin, 27.9 parts by weight of Phenolite (registered trademark) TD2090 (DIC Corporation) as a curing agent, and 0.3 parts by weight of CUREZOL (registered trademark) 2PZ (registered trademark) (Shikoku Kasei Kogyo Co., Ltd.) as a curing accelerator were dissolved in 100 parts by weight of acetone to prepare 50 wt% of a resin solution A.

[3] Production of Coating Slurry

[Manufacturing Example 3]

To the resin solution A, natural graphite in an amount of 3.16 times the mass of a resin, and 4 wt% of a carbon fiber with respect to graphite were added, followed by diluting to a graphite concentration of 50 wt% with acetone so as to provide a concentration appropriate for coating, to obtain a coating slurry.

[4] Production of Conductive Metal Resin Multilayer Body and Evaluation Thereof

[Example 1]

A resin solution A was added dropwise to a conductive sheet A to impregnate the conductive sheet A with the resin solution A, and acetone was volatilized to produce a multilayer body manufacturing sheet which was a complex of the conductive sheet and the resin. The impregnation amount of the resin solution was set such that the grammage of the complex after the volatilization of acetone was 92 g/m$^2$.

The produced multilayer body manufacturing sheet was disposed on each of the upper and lower surfaces of SUS304H as a stainless steel (SUS) foil having a thickness of 50 μm. The resulting product was sandwiched between polytetrafluoroethylene sheets which were mold release sheets, followed by pressurizing at a mold temperature of 90°C and a pressure of 1 MPa for 30 seconds with a compression molding machine, to produce a multilayer body A in which the complex was welded to the SUS foil.

[Comparative Example 1]

The slurry of Manufacturing Example 3 was coated in an amount of 101 g/m$^2$ after drying on each of both surfaces of a SUS foil using a bar coater, and dried to obtain a multilayer body B.
The multilayer bodies A and B were subjected to the following evaluations.

[Surface Observation]

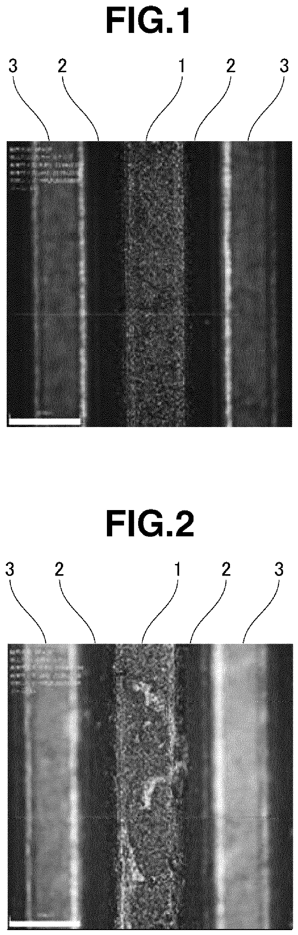

Each of the multilayer bodies A and B was put into a mold including a groove serving as a flow path, and heat-molded with a compression molding machine at a mold temperature of 185°C and a pressure of 60 MPa for 5 minutes, to obtain the multilayer bodies A and B each including the flow path.
The surfaces of the multilayer bodies A and B each including the flow path were observed with a digital microscope. The results are shown in Table 1. FIG. 1 shows the observation image of the multilayer body A including the flow path, and FIG. 2 shows the observation image of the multilayer body B including the flow path. In FIGS. 1 and 2, numeral number 1 designates a convex part of the flow path; numeral number 2 designates a side surface of the flow path; and numeral number 3 designates a bottom part of the flow path.

[Penetration Resistance]

Each of the multilayer bodies A and B was put into a flat plate mold, and heat-molded with a compression molding machine at a mold temperature of 185°C and a pressure of 60 MPa for 5 minutes, to obtain the flat plate multilayer bodies A and B. Gold-plated copper electrodes were disposed above and below each of test pieces of 15 mm × 15 mm × 0.15 mm cut out from these multilayer bodies, and a current was applied such that a current density was set to 1 A/cm$^2$ while a surface pressure of 1 MPa was applied in a vertical direction. A voltage drop at that time was measured by a 4-terminal method, and penetration resistance was determined according to the following formula. The results are shown in Table 1.

$$\text{Penetration resistance } (m\Omega\cdot cm^2) = \text{voltage drop/current density}$$

[Bending Strength]

Each of the multilayer bodies A and B was put into a flat plate mold, and heat-molded with a compression molding machine at a mold temperature of 185°C and a pressure of 60 MPa for 5 minutes, to obtain the flat plate multilayer bodies A and B. Bending strength was determined based on JIS K 7171 using each of test pieces of 60 mm × 10 mm × 0.15 mm cut out from these multilayer bodies. The results are shown in Table 1.

[Table 1]

|  |  | Example 2 | Comparative Example 2 |
|---|---|---|---|
| Multilayer body |  | A | B |
| Metal foil [μm] |  | 50 | 50 |
| Resin layer | Graphite [wt%] | 72 | 72 |
|  | Carbon fiber [wt%] | 3 | 3 |
|  | Organic fiber [wt%] | 8 | 0 |
|  | Impregnated resin [wt%] | 17 | 25 |
| Surface observation |  | No exposed metal foil | Exposed metal foil |
| Penetration resistance [mΩ·cm$^2$] |  | 20 | 20 |

(continued)

|  | Example 2 | Comparative Example 2 |
|---|---|---|
| Bending strength [MPa] | 170 | 150 |

From FIG. 1, the multilayer body A including the flow path could be molded without exposing the metal foil, whereas from FIG. 2, the multilayer body B including the flow path had the metal foil exposed in the convex part 1 and the side surface 2 of the flow path. From the results shown in Table 1, the molded body obtained by compression molding the conductive metal resin multilayer body of the present invention had excellent conductivity and strength without exposing the metal foil.

REFERENCE SIGNS LIST

1    convex part of flow path
2    side surface of flow path
3    bottom part of flow path

**Claims**

1.   A conductive metal resin multilayer body comprising:

     a metal foil; and
     a resin layer containing a conductive filler composed of a non-metal material, an organic fiber, and a resin on at least one surface thereof.

2.   The conductive metal resin multilayer body according to claim 1, wherein the resin layer is obtained by impregnating a non-metal conductive sheet containing the conductive filler composed of the non-metal material and the organic fiber with the resin.

3.   The conductive metal resin multilayer body according to claim 1 or 2, wherein the organic fiber has a melting point higher than a heating temperature when the conductive metal resin multilayer body is heated and processed, and is present in a fibrous form even after processed.

4.   The conductive metal resin multilayer body according to any one of claims 1 to 3, wherein the resin is a thermosetting resin.

5.   The conductive metal resin multilayer body according to any one of claims 1 to 4, wherein the conductive filler is composed of a carbon material.

6.   A molded body obtained by molding the conductive metal resin multilayer body according to any one of claims 1 to 5.

7.   The molded body according to claim 6, wherein the molded body is a fuel cell separator, a collector for batteries, an electrode, or a heat radiation plate.

8.   A fuel cell separator comprising:

     a metal foil; and
     a resin layer containing a conductive filler composed of a non-metal material, an organic fiber, and a resin on at least one surface thereof,
     wherein the fuel cell separator includes a groove in one surface or both surfaces.

9.   A sheet for producing a conductive metal resin multilayer body comprising: a metal foil; and a resin layer containing a conductive filler composed of a non-metal material, an organic fiber, and a resin on at least one surface thereof, wherein the sheet is obtained by impregnating a non-metal conductive sheet containing the conductive filler composed of the non-metal material and the organic fiber with a resin composition containing the resin.

10. The sheet for producing a conductive metal resin multilayer body according to claim 9, wherein the non-metal conductive sheet is composed of a paper sheet containing the conductive filler composed of the non-metal material and the organic fiber.

11. The sheet for producing a conductive metal resin multilayer body according to claim 9 or 10, wherein the resin is a thermosetting resin.

12. The sheet for producing a conductive metal resin multilayer body according to any one of claims 9 to 11, wherein the conductive filler is composed of a carbon material.

13. A method for producing a conductive metal resin multilayer body, the method comprising the step of placing the sheet for producing a conductive metal resin multilayer body according to any one of claims 9 to 12 on at least one surface of a metal foil, followed by pressurizing.

# FIG.1

3    2         1    2    3

# FIG.2

3    2         1    2    3

## INTERNATIONAL SEARCH REPORT

| | |
|---|---|
| | International application No. |
| | PCT/JP2019/040234 |

### A. CLASSIFICATION OF SUBJECT MATTER
Int.Cl. See extra sheet

According to International Patent Classification (IPC) or to both national classification and IPC

### B. FIELDS SEARCHED

Minimum documentation searched (classification system followed by classification symbols)

```
Int.Cl.    B32B15/08,    B29C43/20,    B29C43/34,    B29C70/12,    B29C70/42,
           B29C70/68,    B32B27/04,    B32B27/20,    H01M8/0206,   H01M8/0221,
           H01M8/0223,   H01M8/0228,   H01M8/0258,   B29K101/10,   B29K105/12,
           B29L9/00
```

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-169126 A (SHOWA DENKO KABUSHIKI KAISHA) 20 June 2000, claims 1-3, paragraphs [0001], [0003], [0012]-[0014], [0022] (Family: none) | 1-7, 9-13<br>8 |
| Y | JP 2003-297383 A (MITSUBISHI PLASTICS, INC.) 17 October 2003, paragraph [0002] & TW 200512967 A | 8 |
| A | WO 01/085849 A1 (NOK CORPORATION) 15 November 2001 & US 2003/0038279 A1 & DE 10196069 T & AU 5666501 A | 1-13 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 December 2019 (09.12.2019) | 17 December 2019 (17.12.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/040234

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-286964 A (KANEKA CORP.) 10 December 2009 (Family: none) | 1-13 |
| A | WO 2005/027248 A1 (MITSUBISHI PLASTICS, INC.) 24 March 2005 & US 2006/0280992 A1 & EP 1667262 A1 & CN 1839501 A & AU 2003264403 A | 1-13 |

Form PCT/ISA/210 (continuation of second sheet) (January 2015)

**INTERNATIONAL SEARCH REPORT**

International application No.

PCT/JP2019/040234

CLASSIFICATION OF SUBJECT MATTER
B32B15/08(2006.01)i,        B29C43/20(2006.01)i,        B29C43/34(2006.01)i,
B29C70/12(2006.01)i,        B29C70/42(2006.01)i,        B29C70/68(2006.01)i,
B32B27/04(2006.01)i,        B32B27/20(2006.01)i,        H01M8/0206(2016.01)i,
H01M8/0221(2016.01)i,       H01M8/0223(2016.01)i,       H01M8/0228(2016.01)i,
H01M8/0258(2016.01)i,       B29K101/10(2006.01)n,       B29K105/12(2006.01)n,
B29L9/00(2006.01)n

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005027248 A